# EUROPEAN PATENT APPLICATION

(11) **EP 2 236 022 A2**
(43) Date of publication of application: **06.10.2010**
(21) Application number: 09251745.7
(22) Date of filing: 06.07.2009
(51) Int. Cl.: A01D 34/68, A01D 43/063

(54) **A walk-behind lawn mower powered by a compression ignition engine that runs on esterified and/or non-esterified plant oil**

(30) Priority: 03.04.2009 CN 200920130323 U
(71) Applicant: Wong, Yen Wen, Dezhen Xilu, Changan Town Dongguan City, Guangdong Province, 523851 (CN)
(72) Inventor: Wong, Yen Wen, Changan Town Dongguan City Guangdong Province, 523-851 (CN); Andrews, Sam, Changan Town Dongguan City Guangdong Province, 523-851 (CN); Wong, Mark, Changan Town Dongguan City Guangdong Province, 523-851 (CN)
(74) Representative: Hocking, Adrian Niall

(57) **Abstract**

A walk-behind lawnmower is powered by a single cylinder compression ignition engine (5). This engine (5) can use esterified and non-esterified plant oil as fuel. This type of lawnmower includes a handle (1), and in front of the handle (1) there is a chassis (3). The chassis (3) has four wheels (4) and the compression ignition engine (5) with a vertical output shaft is mounted thereon. On the engine's output shaft there is mounted grass cutting blades. At the back of the chassis (3) a grass collector (2) is detachably mountable. Esterified or non-esterified plant oil as fuel when burned is is 'carbon neutral' and also releases less CO₂ and CO into the atmosphere. Therefore this type of lawnmower is more environmentally friendly.

## Description

This invention is concerning of a type of walk-behind lawnmower which is powered by a single cylinder compression ignition engine. This engine can use esterified and/or non-esterified plant oil plant oil as fuel.

It has been identified there are more than 1000 oil producing plants around the world. One of the advantages of using esterified and non-esterified plant oil as engine fuels compared to using petroleum base engine fuels is the reduction of greenhouse gases such as the amount of CO₂ and CO to be released into the atmosphere. In the whole world only the United States alone some 5% of the national pollution is caused by lawn and gardening equipment. Furthermore, Plant oil, esterified or non-esterified, as fuel is a "biomass" fuel and is considered to be 'carbon neutral'. Walk-behind lawnmowers have relatively less working intensity and working life compared to say road vehicles. These characteristics make it possible to use a compression ignition engine with plant oil as fuel. This is because some of the problems in association with burning non-esterified plant oil (such as carbon and fatty acid built-up etc.) are not so severe. Non-esterified plant oil includes pure plant oil (PPO), straight vegetable oil (SVO), used cooking oil (UCO) and waste vegetable oil (WVO). Esterified plant oil is mostly regarded as plant oil (both used and non-used) being processed to become biodiesel.

The aim of this invention is to overcome the abovementioned problems in association with burning non-esterified plant oil in turn to provide a type of walk-behind lawnmower which is powered by a compression ignition engines that can use all plant oil, esterified and non-esterified, as fuel.

The technical scheme of this invention is to design a type of walk-behind lawnmower which is powered by a compression ignition engine that can use esterified and non-esterified plant oil as fuel.

According to the invention, there is provided a walk-behind lawnmower comprising a chassis having four spaced wheels, a compression ignition engine with a vertical output shaft mounted on the chassis, grass cutting blades mounted on the output shaft, a handle projecting from a rear of the chassis, and a fuel tank supported by the chassis for providing fuel to the engine, characterized in that at least one electrical fuel pre-heater is provided for pre-heating fuel supplied to the engine so that esterified and/or non-esterified plant oil can be used as fuel.

Preferable and/or optional features of the invention are set forth in claims 2 to 15, inclusive.

In the fuel tank of the abovementioned compression ignition engine there is an electrical heater to heat the non-esterified plant oil.

At the air in-taking part of the abovementioned compression ignition engine there can be an air charger. As in this invention, this charger is designed based on one of the following methods: either as turbo charging powered by the engine's exhausted gases; or as mechanical supercharging powered by the engine's output shaft; or as air blowing powered by a battery.

The abovementioned compression ignition engine has a single pintle pin-type injector and uses direct or indirect injection method.

The abovementioned compression ignition engine also has a deeply bowl-shaped recess on its piston top

This invention is to enable engines, which used on this type of lawnmower, to use esterified and non-esterified plant oil as fuel. Plant oil as fuel when burned it is 'carbon neutral' therefore no or limited contribution to the greenhouse effect. The inventors have made these engines simple and small enough to be feasible for large scale production.

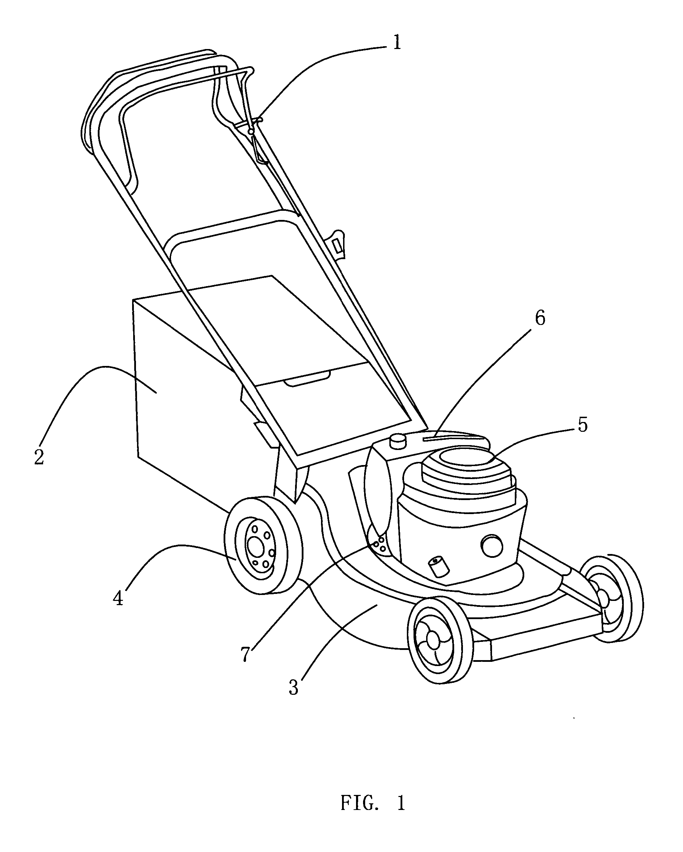

The invention will now be more particularly described, by way of example only, with reference to the accompanying sole drawing, in which Figure 1 is an isometric structural drawing of a walk-behind lawnmower in accordance with the invention.

As shown in Figure 1, it is a type of walk-behind lawnmower that is powered by compression ignition engines that can use esterified and non-esterified plant oil as fuel. This type of lawnmower includes: a handle 1, in front of the handle 1 there is a chassis 3, on the chassis 3 mounted four wheels 4 and on the chassis 3 also mounted a compression ignition engine with vertical output shaft. The engine can use esterified and non-esterified plant oil as fuel. On engine's vertical output shaft mounted grass cutting blades. At back of the chassis a grass collector 2 can also be mounted on. In the fuel tank of the abovementioned compression ignition engine 5 there is an electrical fuel heater to heat the non-esterified plant oil. At the air in-taking part of the abovementioned compression ignition engine 5 there can be an air charger added. Abovementioned engine 5 has a single pintle pin-type fuel injector and a deeply bowl-shaped piston crown.

The abovementioned charger for engine's air in-taking is designed based on one of the following three methods: turbo charging powered by the engine's exhausted gases; or mechanical supercharging powered by the engine's output shaft; or air blowing powered by a battery.

In this invention the inventors use a single cylinder 4-stroke compression ignition engine with a vertical output shaft. The engine is designed to be able to run on esterified and non-esterified plant oil fuel. The engine has a relatively smaller capacity (1∼3 kW) but more efficient on fuel. The inventors added electrical heaters in the fuel tank 6 and along the fuel lines to heat the non-esterified plant oil fuel prior it being injected in to the combusting chamber, thus the viscosity of the fuel is reduced. Higher quality filtration has been applied before and after the fuel pump. Fuel pump pressure has also been increased. In this invention either 'direct injection' or 'indirect injection' method together with a specially designed so called 'single pintle pin-type' injection nozzle are used for the inventors' engine. A deeply bowl-shaped recess on the piston top is used to incorporate with the injector to make better mix of the fuel. All these measures are aiming to overcome the problems of non-esterified plant oil burning in a compression ignition engine. An air charger 7 to increase the pressure of in-taking air for the engine combustion can also be added to the engine as an option. This will further improve the burning of plant oil in the engine. This device is designed based on one of the following three methods: 1) turbo charging powered by the engine's exhausted gases, 2) mechanical supercharging powered by the engine's output shaft and 3) air blowing powered by a battery.

The embodiments described above are provided by way of examples only, and various other modifications will be apparent to persons skilled in the field without departing from the scope of the invention as defined by the appended claims.

## Claims

1. A walk-behind lawnmower comprising a chassis (3) having four spaced wheels (4), a compression ignition engine (5) with a vertical output shaft mounted on the chassis (3), grass cutting blades mounted on the output shaft, a handle (1) projecting from a rear of the chassis (3), and a fuel tank supported by the chassis (3) for providing fuel to the engine (5), **characterized in that** at least one electrical fuel pre-heater is provided for pre-heating fuel supplied to the engine so that esterified and/or non-esterified plant oil can be used as fuel.

2. A walk-behind lawnmower as claimed in claim 1, wherein the electrical fuel pre-heater is on a fuel line from the fuel tank to the engine (5).

3. A walk-behind lawnmower as claimed in claim 2, wherein a plurality of said electrical fuel pre-heaters are provided on the fuel line.

4. A walk-behind lawnmower as claimed in claim 3, wherein the plurality of electrical fuel pre-heater are spaced along the fuel line.

5. A walk-behind lawnmower as claimed in any one of the preceding claims, wherein a said electrical fuel pre-heater is provided in the fuel tank.

6. A walk-behind lawnmower as claimed in any one of the preceding claims, further comprising a detachable grass collector (2) at the back of the chassis.

7. A walk-behind lawnmower as claimed in any one of the preceding claims, further comprising a charger (7) for increasing a pressure of in-take air.

8. A walk-behind lawnmower as claimed in claim 7, wherein the charger (7) is a turbo charger powerable by the engine's exhaust gases.

9. A walk-behind lawnmower as claimed in claim 7, wherein the charger (7) is a mechanical supercharger powerable by the engine's output shaft.

10. A walk-behind lawnmower as claimed in claim 7, wherein the charger (7) is a battery-powered air-blower.

11. A walk-behind lawnmower as claimed in any one of the preceding claims, wherein the compression ignition engine (5) includes direct fuel injection.

12. A walk-behind lawnmower as claimed in any one of claims 1 to 10, wherein the compression ignition engine (5) includes indirect fuel injection.

13. A walk-behind lawnmower as claimed in any one of claims 1 to 10, wherein the compression ignition engine (5) includes a single pintle pin-type injector.

14. A walk-behind lawnmower as claimed in any one of claims 1 to 10, wherein the compression ignition engine (5) includes a deeply bowled piston crown.

15. A walk-behind lawnmower as claimed in any one of claims 1 to 10, wherein the compression ignition engine (5) includes a high fuel injection pressure.
